(19) Europäisches Patentamt
European Patent Office
Office européen des brevets

(11) **EP 2 102 254 B1**

(12) **EUROPEAN PATENT SPECIFICATION**

(45) Date of publication and mention
of the grant of the patent:
**22.09.2010 Bulletin 2010/38**

(51) Int Cl.:
***C08F 20/00*** (2006.01)      ***C08F 220/06*** (2006.01)
***C08L 33/02*** (2006.01)      ***C08L 33/14*** (2006.01)

(21) Application number: **06845604.5**

(22) Date of filing: **18.12.2006**

(86) International application number:
**PCT/US2006/048019**

(87) International publication number:
**WO 2008/076101 (26.06.2008 Gazette 2008/26)**

(54) **(METH)ACRYLIC RESIN COMPOSITION AND FILMS OF SAME**

(METH)ACRYLHARZZUSAMMENSETZUNG UND FOLIEN DARAUS

COMPOSITION DE RÉSINE (MÉTH)ACRYLIQUE ET FILMS FABRIQUÉS À PARTIR DE CETTE COMPOSITION

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**23.09.2009 Bulletin 2009/39**

(73) Proprietor: **3M Innovative Properties Company Saint Paul, MN 55133-3427 (US)**

(72) Inventors:
• **TAKAMATSU, Yorinobu**
**Tokyo 158-8583 (JP)**

• **ABE, Hidetoshi**
**Tokyo 158-8583 (JP)**
• **TORIUMI, Naoyuki**
**Tokyo 158-8583 (JP)**
• **KASHIHARA, Yoshihiro**
**Tokyo 158-8583 (JP)**

(74) Representative: **Vossius & Partner**
**Siebertstrasse 4**
**81675 München (DE)**

(56) References cited:
**EP-A- 1 454 959      US-A- 4 404 301**
**US-A- 4 729 834      US-A1- 2004 105 052**

## Description

### Technical Field

The present invention relates to a (meth)acrylic resin composition and to films thereof. Films according to the invention can be used as bases of marking films or receptor sheets in interior and exterior trim for housing and other construction, facing materials for fittings, automotive interior and exterior trim, and so forth.

### Background

Vinyl chloride-based resins, which strike a good balance between tensile strength and elongation characteristics, have been widely used in the past as films used for surface decoration purposes. In recent years, however, widely reported environmental concerns regarding vinyl chloride-based resins have spurred the development of acrylic resin alternatives. Acrylic resins having excellent transparency, light stability, and resistance to stress whitening have been disclosed (see Japanese Laid-Open Patent Application 10-101748). Furthermore, acrylic resins are generally more weather resistant than other resins such as vinyl chloride resins that have been used in the past.

According to WO 2005/023916 A1, when an acrylic resin is made into a film, it is often hard and brittle and cannot stand up to use as a decorative sheet or the like. As a result, this patent application discloses a film containing a (meth)acrylic polymer with a high glass transition point and a (meth)acrylic polymer with a low glass transition point as a way to impart flexibility and reduce the brittleness of acrylic resins. With these films, the (meth)acrylic polymer with a high glass transition point gives the film high tensile strength, while the (meth)acrylic polymer with a low glass transition point gives the film good elongation characteristics at low temperatures. Accordingly, it is possible to provide an acrylic resin film having high tensile strength and good elongation characteristics.

Nevertheless, problems with acrylic resin films include decreased film strength and yellowing depending on the application or manufacturing method, such as when the films are used for extended periods outdoors, or when they are produced by melt extrusion molding requiring heating. Thus, there is a need for acrylic resin films having improved weather and heat resistance, yet also have high tensile strength and good elongation characteristics.

### Summary

The (meth)acrylic resin compositions and films were conceived in an effort to solve the above problems such that the films have improved heat resistance and weather resistance, as well as high tensile strength and good elongation characteristics. The (meth)acrylic resin compositions and films comprise two or more kinds of polymer, particularly, a carboxyl group-containing (meth)acrylic polymer and a piperidinyl group-containing polymer. The carboxyl groups and piperidinyl groups form acid-base ionic bonds, so affinity between the two polymers is improved and the film exhibits good toughness.

Also disclosed herein is a receptor sheet comprising any one of the (meth)acrylic resin films described above. The receptor sheet may have a receptor layer on the film, the receptor layer comprising a resin having a glass transition temperature between 0 and 100°C. Optionally, the receptor sheet comprises an adhesive layer on the film, on the side opposite the receptor layer. Also disclosed herein is a marking film comprising one or more colorants deposited on one of the receptor sheets, the one or more colorants forming an image, and the marking film also comprising a protective film over the one or more colorants. The protective film comprises a resin and has an optical transmissivity of at least 60%.

A method of forming an image is also disclosed herein, the method comprising: providing one of the receptor sheets described herein; providing a printer equipped with one or more colorants; and printing on the receptor sheet using the printer, such that the one or more colorants are deposited on the receptor sheet to form an image.

These and other aspects of the invention will be apparent from the detailed description below. In no event, however, should the above summary be construed as a limitation on the claimed subject matter, which subject matter is defined solely by the attached claims, as may be amended during prosecution.

### Brief Descriptions of Drawings

The invention may be more completely understood in consideration of the following detailed description and examples in connection with the figures described below. The figures, in no event, should be construed as limitations on the claimed subject matter, which subject matter is defined solely by the claims as set forth herein.

FIG. 1 is a cross section schematically illustrating one embodiment of an exemplary marking film.
FIG. 2 is a cross section schematically illustrating one embodiment of a receptor sheet of the present invention.

**Detailed Description**

(Meth)Acrylic Resin Composition

The (meth)acrylic resin composition disclosed herein comprises a carboxyl group-containing (meth)acrylic polymer and a piperidinyl group-containing (meth)acrylic polymer. As used herein, the term "(meth)acrylic" means either acrylic or methacrylic. The above-mentioned carboxyl group-containing (meth)acrylic polymer includes units originating in a carboxyl group-containing monomer, and one way to obtain the carboxyl group-containing (meth)acrylic polymer is to copolymerize a monoethylenic unsaturated monomer and an unsaturated monomer that contains carboxyl groups. One way to obtain the above-mentioned piperidinyl group-containing (meth)acrylic polymer is to copolymerize a monoethylenic unsaturated monomer and an unsaturated monomer that contains piperidinyl groups.

Copolymerization is typically carried out by radical polymerization. Any known polymerization method can be used for this purpose, such as solution polymerization, suspension polymerization, emulsion polymerization, or block polymerization. As an initiator, benzoyl peroxide, lauroyl peroxide, bis(4-tert-butylcyclohexyl)peroxydicarbonate, or another such organic peroxide, or 2,2'-azobisisobutyronitrile, 2,2'-azobis-2-methylbutyronitrile, 4,4'-azobis-4-cyanovalerianic acid, dimethyl 2,2'-azobis(2-methylpropionate), azobis-2,4-dimethylvaleronitrile (AVN), or another such azo-based polymerization initiators can be used. The amount in which this initiator is used is typically from 0.05 to 5 weight parts per 100 weight parts of the monomer mixture.

For the (meth)acrylic resin composition, if the Tg of the carboxyl group-containing (meth)acrylic polymer is 0°C or higher, then it may be desirable for the Tg of the piperidinyl group-containing (meth)acrylic polymer to be 0°C or lower. Similarly, if the Tg of the carboxyl group-containing (meth)acrylic polymer is 0°C or lower, then it may be desirable for the Tg of the piperidinyl group-containing (meth)acrylic polymer to be 0°C or higher. Without wishing to be bound by theory, it is believed that the (meth)acrylic polymer with a high Tg gives the film a high tensile strength, and the (meth)acrylic polymer with a low Tg gives the film good elongation characteristics at low temperatures.

The weight average molecular weight (Mw) of the above-mentioned polymers is selected to balance various properties.in the resins and films made therefrom. If the molecular weight is too high, the resin may be too viscous and so may be difficult to coat during film manufacture. On the other hand, if the molecular weight is too low, then the elongation at break, strength at break, and weather resistance of the resins and films made therewith may be adversely affected. Within these parameters, polymers having a Mw of at least 10,000, for example at least 50,000 or at least 100,000, have been found to be useful. The term "weight average molecular weight (Mw)" here means the molecular weight as measured according to gel permeation chromatography (GPC), in terms of styrene.

The monoethylenic unsaturated monomer that makes up the (meth)acrylic polymer is the major component of the polymer. Suitable monoethylenic unsaturated monomers include aromatic vinyl monomers (e.g., styrene, α-methylstyrene, vinyltoluene), and vinyl esters (e.g., vinyl acetate), and monomers corresponding to the formula $CH_2=CR_1COOR_2$ (where $R_1$ is a hydrogen or a methyl group, and $R_2$ is a linear, branched, or cyclic alkyl group (e.g., methyl (meth)acrylate, ethyl (meth)acrylate, n-butyl (meth)acrylate, isoamyl (meth)acrylate, n-hexyl (meth)acrylate, 2-ethylhexyl (meth)acrylate, isooctyl (meth)acrylate, isononyl (meth)acrylate, decyl (meth)acrylate, dodecyl (meth)acrylate, cyclohexyl (meth)acrylate), a phenyl group, an alkoxyalkyl group(e.g., methoxypropyl (meth)acrylate, 2-methoxybutyl (meth)acrylate), phenoxyalkyl group(e.g., phenoxyethyl (meth)acrylate), hydroxyalkyl group(e.g., 2-hydroxyethyl (meth)acrylate, 2-hydroxypropyl (meth)acrylate, 4-hydroxybutyl (meth)acrylate), cyclic ether group(e.g., glycidyl (meth)acrylate, tetrahydrofurfuryl (meth)acrylate), and so forth can be used. These are used singly or in combinations of two or more, according to the intended application, to obtain the desired glass transition temperature, tensile strength, and elongation characteristics.

Examples of the carboxyl group-containing unsaturated monomer that makes up the carboxyl group-containing (meth)acrylic polymer when copolymerized with the above-mentioned monoethylenic unsaturated monomer include unsaturated monocarboxylic acids (e.g., acrylic acid, methacrylic acid), unsaturated dicarboxylic acids (e.g., maleic acid, itaconic acid), omega-carboxypolycaprolactone monoacrylate, phthalic acid monohydroxyethyl (meth)acrylate, beta-carboxyethyl acrylate, 2-(meth)acryloyloxyethylsuccinic acid, and 2-(meth)acryloyloxyethylhexahydrophthalic acid.

The carboxyl group-containing (meth)acrylic polymer is preferably obtained by copolymerizing a monoethylenic unsaturated monomer as the major component, and more specifically in an amount of from 80 to 95.5 weight parts, with an unsaturated monomer that contains carboxyl groups, in an amount of from 0.5 to 20 weight parts based on the weight parts of the monoethylenic unsaturated monomer. To the extent that the effect of the present invention is not lost, other monomers can also be added and copolymerized.

Examples of the unsaturated monomers that contain piperidinyl groups and that make up the piperidinyl group-containing (meth)acrylic polymer when copolymerized with the above-mentioned monoethylenic unsaturated monomer include piperidinyl group-containing (meth)acrylate monomers such as 4-(meth)acryloyloxy-2,2,6,6-tetramethylpiperidine, 4-(meth)acryloylarnino-2,2,6,6-tetramethylpiperidine, 4-(meth)acryloyloxy-1,2,2,6,6-pentamethylpiperidine, 4-(meth)acryloylamino-1,2,2,6,6-pentamethylpiperidine, 4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, and 1-crotonoyl-4-crotonoyloxy-2,2,6,6-tetramethylpiperidine.

A monomer containing amino groups other than piperidinyl groups can also be copolymerized with the piperidinyl group-containing (meth)acrylic polymer. Examples of these monomers that contain amino groups include N,N-dimethylaminoethyl acrylate (DMA), N,N-dimethylaminoethyl methacrylate (DMM), and other such dialkylaminoalkyl (meth)acrylates, N,N-dimethylaminopropyl acrylamide (DMAPAA), N,N-dimethylaminopropyl methacrylamide, and other such dialkylaminoalkyl (meth)acrylamide, and monomers having tertiary amino groups, typified by vinyl monomers having nitrogen-containing heterocycles such as vinylimidazoles.

The piperidinyl group-containing (meth)acrylic polymer is preferably obtained by copolymerizing a monoethylenic unsaturated monomer as the major component, and more specifically in an amount of from 80 to 95.5 weight parts, with an unsaturated monomer that contains piperidinyl groups, in an amount of from 0.5 to 20 weight parts based on the weight parts of the monoethylenic unsaturated monomer. Without wishing to be bound by theory, it is believed that adequate weather resistance and heat resistance will not be obtained if the amount of unsaturated monomer that contains piperidinyl groups is too small. To the extent that the effect of the present invention is not lost, other monomers can also be added and copolymerized.

An amino group-containing (meth)acrylic polymer may be obtained by copolymerizing a monoethylenic unsaturated monomer with a monomer that contains amino groups other than piperidinyl groups can also be separately prepared and added to the carboxyl group-containing (meth)acrylic polymer and the piperidinyl group-containing (meth)acrylic polymer.

The amino group-containing (meth)acrylic polymer may be obtained by copolymerizing a monoethylenic unsaturated monomer as the main component, and more specifically in an amount of from 80 to 95.5 weight parts, with an unsaturated monomer that contains amino groups other than piperidinyl groups in an amount of from 0.5 to 20 weight parts based on the weight parts of the monoethylenic unsaturated monomer. This is because miscibility with the carboxyl group-containing (meth)acrylic polymer will be poor if the amount of unsaturated monomer that contains amino groups is too small.

In copolymerizing the carboxyl group-containing (meth)acrylic polymer, the piperidinyl group-containing (meth)acrylic polymer, or the amino group-containing (meth)acrylic polymer, an ultraviolet absorbent monomer can also be added and copolymerized with these polymers. Copolymerizing this monomer with the various polymers may provide a (meth)acrylic resin composition with even better long-term weather resistance and may reduce bleed-out of the ultraviolet absorbent monomer onto the surface of the (meth)acrylic resin composition.

The term "ultraviolet absorbent monomer" here refers to a monomer that absorbs UV rays. A benzotriazole monomer, benzophenone monomer, triazine monomer, or the like can be used as the ultraviolet absorbent monomer. Examples of benzotriazole monomers include 5-(2-methacryloxyethyl)-2-hydroxyphenylbenzotriazole (MAEHPB), 2-[2'-hydroxy.5'-(methacryloyloxymethyl)phenyl]-2H-benzotriazole, 2-[2'-hydroxy-5'-(methacryloyloxyethyl)phenyl]-2H-benzotriazole, 2-[2'-hydroxy-5'-(methacryloyloxypropyl)phenyl]-2H-benzotriazole, 2-[2'-hydroxy-5'-(methacryloyloxyhexyl)phenyl]-2H-benzotriazole, 2-[2'-hydroxy-3'-t-butyl-5'-(methacryloyloxyethyl)phenyl]-2H-benzotriazole, 2-[2'-hydroxy-5'-t-butyl-3'-(methacryloyloxyethyl)phenyl]-2H-benzotriazole, 2-[2'-hydroxy-5'-(methacryloyloxyethyl)phenyl]-5-chloro-2H-benzotriazole, 2-[2'-hydroxy-5'-(methacryloyloxyethyl)phenyl]-5-methoxy-2H-benzotriazole, 2-[2'-hydroxy-5'-(methacryloyloxyethyl)phenyl]-5-cyano-2H-benzotriazole, 2-[2'-hydroxy-5'-(methacryloyloxyethyl)phenyl]-5-t-butyl-2H-benzotriazole, 2-[2'-hydroxy-5'-(methacryloyloxyethyl)phenyl]-5-nitro-2H-benzotriazole, and 2-[2'-hydroxy-5'-(β-methacryloyloxyethoxy)-3'-t-butylphenyl]-4-t-butyl-2H-benzotriazole, although this list is not comprehensive. Also, two or more kinds of these ultraviolet absorbent monomers can be used together.

An ultraviolet stable monomer that has no ability to absorb UV rays, but exhibits UV stability by a different action from that of a UV absorbent can also be copolymerized with the carboxyl group-containing (meth)acrylic polymer. An unsaturated monomer that contains piperidinyl groups is a typical example of this ultraviolet stable monomer, but since it is a basic component, it must be copolymerized in a small enough amount that it will have no effect on miscibility with other (meth)acrylic polymers.

To obtain a (meth)acrylic polymer with a Tg of 0°C or higher, a (meth)acrylic monomer with a Tg of 0°C or higher, such as methyl methacrylate (MMA) or n-butyl methacrylate (BMA), may be copolymerized as the main component.

Also, a (meth)acrylic polymer with a Tg of 0°C or lower can be obtained by copolymerizing as the main component a homopolymer having a Tg of 0°C or lower, such as ethyl acrylate (EA), n-butyl acrylate (BA), or 2-ethylhexyl acrylate (2EHA).

(Meth)acrylic Resin Composition and Films

After the (meth)acrylic polymers have each been separately polymerized as discussed above, they may be used to form (meth)acrylic resin compositions and films. To form the films, a variety of conventional film forming techniques may be used, including solvent casting and melt extrusion molding. A convenient solvent casting technique involves the way that resin compositions and films can be formed, for example, by mixing solutions of these polymers, adding toluene, ethyl acetate, or another such volatile solvent if necessary to adjust the viscosity, coating the release surface of a liner, and removing the volatile solvents of the polymer solutions by drying. Any ordinary coater can be used for this coating apparatus, such as a bar coater, knife coater, roll coater, or die coater.

The resin compositions and the films can also be formed by melt extrusion molding. When melt extrusion molding is employed, the polymers must be melted at a high temperature (such as 180°C or higher) in order to lower the viscosity of the polymers during coating. Melt extrusion molding that does not require any volatile solvent and this can be used to particular advantage when producing a thick film with a film thickness of about 40 $\mu$m or more. This is because problems tend to occur when a volatile solvent is used, such as removal of the solvent by drying takes a long time, and the film appearance suffers when bubbles are formed during solvent drying.

When melt extrusion molding is used, the various (meth)acrylic polymers can also each be separately prepared, put into an extruder, and melt-mixed in the extruder.

Any ordinary extruder can be used for the melt extrusion molding, such as a single-screw extruder or twin-screw extruder. A support may be coated with the polymers that have been melted in the extruder, and the temperature is then lowered to solidify the molten polymers, thereby forming a film, in this case a layer, of the (meth)acrylic polymers on the support.

In the formation of these films, a film having the desired tensile strength and elongation characteristics can be obtained by varying the ratios in which the (meth)acrylic polymers are blended. More specifically, the blend ratio for a (meth)acrylic polymer having a Tg higher than 0°C to a polymer having a Tg lower than 0°C is from 10:90 to 90:10, for example, from 20:80 to 90:10, from 30:70 to 90:10, or from 50:50 to 90:10. In general, it is preferable for there to be more of the polymer with the higher Tg. This is because if the amount of polymer with a low Tg is too large, then when the films thus produced are stacked and stored, they will stick together (blocking) or be difficult to separate.

The (meth)acrylic resin compositions and films pertaining to the present invention can also be formed by mixing one or more kinds of carboxyl group-containing (meth)acrylic polymer with one or more kinds of piperidinyl group-containing (meth)acrylic polymer.

The (meth)acrylic resin compositions may include a crosslinking agent that reacts with carboxyl groups or amino groups. Specific examples of crosslinking agents having functional groups that can react with carboxyl groups include bisamide-based crosslinking agents such as isophthaloyl bis(2-methylaziridine), aziridine-based crosslinking agents (such as Chemitite PZ33 made by Nippon Shokubai, or NeoCryl CX-100 made by Avecia), carbodiimide-based crosslinking agents (such as Carbodilite V-03, V-05, or V-07 made by Nisshinbo), epoxy-based crosslinking agents (such as E-AX, E-5XM, or E5C made by Soken Kagaku), and isocyanate-based crosslinking agents (such as Coronate L or Coronate HK made by Nippon Polyurethane, or Desmodur H, Desmodur W, or Desmodur I made by Bayer). The amount in which the crosslinking agent is added is typically from 0.01 to 0.5 equivalents with respect to the carboxyl groups in the carboxyl group-containing (meth)acrylic polymer.

Meanwhile, specific examples of crosslinking agents having functional groups that can react with amino groups include epoxy-based crosslinking agents (such as E-AX, E-5XM, or E5C made by Soken Kagaku), and isocyanate-based crosslinking agents (such as Coronate L or Coronate HK made by Nippon Polyurethane, or Desmodur H, Desmodur W, or Desmodur I made by Bayer). The amount in which the crosslinking agent is added is typically from 0.01 to 0.5 equivalents with respect to the amino group-containing monomer.

If hiding power is required of the film, a hiding pigment can further be added. In addition, one or more kinds of conventional additives can be added as dictated by the intended application of the film, such as antioxidants, UV absorbents, light stabilizers, plasticizers, aggregates, antistatic agents, flame retardants, and fillers.

For the (meth)acrylic films disclosed herein, the tensile strength at break at 25°C is desirably at least 3 MPa, and even more preferably at least 15 MPa, otherwise the film may be susceptible to breaking when being applied to an adherend. Also, the elongation at 25°C of the (meth)acrylic films disclosed herein is desirably at least 25%, for example, at least 50% or at least 75%, otherwise the film will be susceptible to breaking when being applied if the elongation is less than 25%.

There are no particular restrictions on the thickness of the (meth)acrylic film of the present invention, and the thickness can be the same as that of conventional decorative sheets. More specifically, although it will vary with the application, the thickness is generally from about 1 to 1000 $\mu$m, for example, from about 5 to 500 $\mu$m or from about 20 to 200 $\mu$m. If the film is too thin, its mechanical strength will be too low such that the film may be damaged when it is applied to an adherend and then peeled off. On the other hand, the flexibility of the film may suffer if the film is too thick.

The (meth)acrylic films disclosed herein have good heat resistance, and in terms of both its yellowness after high-temperature exposure testing and its yellowing index ($\Delta$YI) (the change in yellowness before and after high-temperature exposure testing), the films exhibit better performance than (meth)acrylic films that do not contain piperidinyl groups. Yellowness is measured according to JIS K 7105, and the yellowing index ($\Delta$YI) of the sample is desirably 1.0 or lower. This is because the film will appear to the eye to have yellowed if the yellowing index (ΔYI) is over 1.0.

The (meth)acrylic film is desirably optically colorless and transparent even after high-temperature testing, which means that the film has a total optical transmissivity of at least 90% when measured according to JIS K 7105 and a haze value of less than 2%.

Also, the (meth)acrylic film has good weather resistance and retains its toughness even after an accelerated aging test. Accordingly, when this film is applied to an adherend outdoors and then peeled off after an extended period, it does not readily break and peels easily from the adherend.

Marking Film

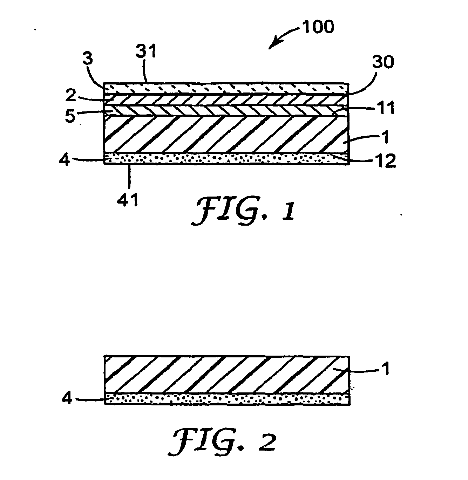

FIG. 1 schematically illustrates an exemplary marking film 100. A (meth)acrylic film I has first major surface 11 and second major surface 12, and a colorant is received on the first major surface 11 to give image layer 2. This colorant is usually a toner or ink and makes up image layer 2 disposed on first major surface 11 of the (meth)acrylic film 1. The image layer 2 can comprise continuously or discontinuously deposited colorant to form an informational or decorative design.

The image layer 2 may be formed using any known printing or painting method for forming an image on a film, including, for example, screen printing, electrographic (electrostatic and electrophotographic) printing, offset printing, inkjet printing, or thermal mass transfer. More than one color can be used to form the image layer, and the final rendered image may be a graphic article or a photographic quality image.

Optionally, a protective film 3 can also be provided on the image layer opposite the (meth)acrylic film for the purpose of preventing the colorant 2 from falling off, for example. In this case, the image layer is visible through the protective film 3, from the outermost side 31 of the protective film 3. Also, a receptor layer 5 can be provided to the first major surface 11 of the (meth)acrylic film 1 to increase adhesion between the colorant 2 and the (meth)acrylic film 1.

An adhesive layer 4 is fixed to the second major surface 12 of the (meth)acrylic film 1. The adhesive layer usually forms a flat adhesive surface, but may instead form a textured adhesive surface. This textured adhesive surface, formed on adhesive side 41 of adhesive layer 4, may comprise protrusions which may be tacky or non-tacky and may comprise recesses or channels which provide a pathway for air or other fluids to escape to an edge of the adhesive coated film product when the film has been bonded to an adherend.

The protective film 3 is light transmitting overall. Its optical transmissivity is usually at least 60%, for example, at least 70% or at least 80%. The term "optical transmissivity" as used herein means the total optical transmissivity as measured by a spectrophotometer, or by a color meter which also serves as a photometer, using light with a wavelength of 550 nm.

The protective film 3 may be made of a resin comprising fluororesins, phthalate polyesters (PET, PEN, etc.), acrylic resins, and petroleum resistant resins. A fluororesin is a polymer obtained by polymerizing a fluorine monomer. Examples of fluorine monomers include fluoroethylene monomers such as vinylidene fluoride, propylene hexafluoride, ethylene tetrafluoride, and trifluorochloroethylene. One or more kinds of copolymerizable monomer selected from among methacrylates such as methyl methacrylate, ethyl methacrylate, propyl methacrylate, and butyl methacrylate, and acrylates such as methyl acrylate, ethyl acrylate, propyl acrylate, and butyl acrylate may also be admixed in addition to the fluorine monomer. Also, a protective film may be formed from a resin composition obtained by blending a fluorine resin with an acrylic resin. The thickness of the protective film 3 is usually from 5 to 120 μm, with 10 to 100 μm being particularly favorable.

A protective film adhesive layer 30 may be usually used to bond the protective film 3 to the (meth)acrylic film 1. There are no particular restrictions on the adhesive agent of the protective film adhesive layer 30, but it is usually a pressure-sensitive adhesive containing a pressure-sensitive polymer. This is because the colorant 2 conforms well to the irregularities formed on the first major surface 11 of the (meth)acrylic film, allowing the protective film 3 and the (meth)acrylic film 1 to adhere tightly together without any bubbles remaining in between. It is better for no bubbles to remain because they impair the visibility of an image. The thickness of the protective film adhesive layer 30 is usually from 20 to 100 μm, preferably from 25 to 80 μm.

There are no particular restrictions on the resin used to form the receptor layer 5, but an acrylic polymer, polyolefin, polyvinyl acetal, phenoxy resin, or the like can be used. The glass transition point of the resin that forms the receptor layer is usually between 0 and 100°C. If the glass transition point of the receptor layer is too high, toner transfer performance may suffer and a distinct image may not be obtained. Furthermore, if the glass transition point of the receptor layer is too high, there may be a decrease in the overall flexibility of the marking film. On the other hand, the glass transition point of the receptor layer should be at least 0°C in order to effectively reduce normal temperature tack on the colorant receiving side. Doing this makes it possible to effectively prevent the marking film precursors or receptor sheets from sticking together before being covered with a protective film. Therefore, when these films have been stored in the form of a roll, the roll can be unwound for use more easily. The thickness of the receptor layer is usually from 2 to 50 μm, and preferably 5 to 40 μm.

There are no particular restrictions on the adhesive agent of the adhesive layer 4, but it is usually a pressure-sensitive adhesive containing a pressure-sensitive polymer. Examples of pressure-sensitive adhesive layers that can be used favorably include a single-layered pressure-sensitive adhesive film containing a pressure-sensitive polymer, and double-sided adhesive sheet having two pressure-sensitive adhesive layers.

The adhesive layer 4 can be formed from a coating film of an adhesive containing a pressure-sensitive polymer. A favorable adhesive will contain a pressure-sensitive polymer and a crosslinking agent that crosslinks the pressure-sensitive polymer. The term "pressure-sensitive polymer", as used herein, is a polymer that exhibits pressure-sensitive adhesion at normal temperature (about 25°C).

Pressure-sensitive adhesive polymers are well known to one of ordinary skill in the art to possess properties including the following: (1) permanent tack, (2) adherence to an adherend with no more than finger pressure, (3) sufficient ability to hold onto an adherend, and (4) sufficient cohesive strength to be cleanly removable from the adherend. Materials that have been found to function well as pressure-sensitive adhesive polymers are polymers designed and formulated to exhibit the requisite viscoelastic properties resulting in a desired balance of tack, peel adhesion, and shear holding power. Obtaining the proper balance of properties is not a simple process.

Useful pressure-sensitive adhesive polymers include those based on natural rubbers, synthetic rubbers, elastomeric block copolymers, styrene block copolymers, polyvinyl ethers, polyolefins, and silicones. Useful pressure-sensitive adhesive polymers also include (meth)acrylic copolymers derived from one or more ethylenically unsaturated monomers including, for example, alkyl(meth)acrylate esters such as isooctyl acrylate, isononyl acrylate, 2-methyl-butyl acrylate, 2-ethyl-hexyl acrylate and n-butyl acrylate; (meth)acrylic acid, vinyl acetate, N-vinyl pyrrolidone, (meth)acrylamide, vinyl esters, fumarates, and styrene derivatives. In one example, the pressure-sensitive adhesive polymer is derived from between about 0 and about 20 weight percent of acrylic acid and between about 100 and about 80 weight percent of at least one of isooctyl acrylate, 2-ethyl-hexyl acrylate, or n-butyl acrylate. For example, the pressure-sensitive adhesive polymer may be derived from between about 2 and about 10 weight percent acrylic acid and between about 90 and about 98 weight percent of at least one of isooctyl acrylate, 2-ethyl-hexyl acrylate, or n-butyl acrylate. Another example comprises from about 2 weight percent to about 10 weight percent acrylic acid, and about 90 weight percent to about 98 weight percent of isooctyl acrylate. For yet another example, the pressure-sensitive adhesive polymer is derived from between about 94-98 weight percent of isooctyl acrylate, 2-ethyl hexyl acrylate, n-butyl acrylate, or 2-methyl butyl acrylate, and 2-6 weight percent (meth)acrylamide.

The marking film 100 can be manufactured as follows, for example. First, the above-mentioned (meth)acrylic film 1 is readied. If the marking film 100 includes a receptor layer 5, the receptor layer is formed on the liner, and the (meth)acrylic film is laminated on the receptor layer with its liner. In this case, as long as the effect of the present invention is not lost, another layer, such as a primer layer or an adhesive layer, may be disposed between the (meth)acrylic film 1 and the receptor layer 5.

Next, the adhesive layer 4 is brought into snug contact with the second major surface of the (meth)acrylic film 1. The release surface of a liner is coated with a coating solution containing an adhesive, and the coating is dried to form an adhesive layer, after which the adhesive layer with the liner is laminated on the second major surface of the (meth)acrylic film 1, so that the adhesive layer is in close contact. Alternatively, the coating solution containing the adhesive may be coated directly on the second major surface of the (meth)acrylic film 1.

After this, an image is formed by the colorant on the first major surface of the (meth)acrylic film 1, and if needed, the protective film 3 is disposed thereover, which completes the marking film 100 of the present invention. If the image is formed by transferring the colorant to the first major surface of the (meth)acrylic film 1, the toner is transferred and the image formed by an ordinary printing method. If electrostatic toner printing is performed, an image is temporarily formed on a temporary carrier called a transfer medium, and this image is transferred by heating and pressing to the front of the (meth)acrylic film 1.

The thickness of the marking film is usually between 30 and 1500 μm, and preferably between 50 and 950 μm. If the marking film is too thin, it may be damaged when it is bonded to an adherend and then peeled off again. On the other hand, if the marking film is too thick, its flexibility may be decreased.

Receptor Sheet

An exemplary receptor sheet will be described through reference to FIG. 2. This receptor sheet does not include the image layer 2 or the protective film 3, and is made up of the (meth)acrylic film 1 and the adhesive layer 4 in the above marking film. Therefore, the (meth)acrylic film and the adhesive layer can have the same constitution as the marking film, and can be formed by the same method. The colorant is deposited on the film, on the side opposite the adhesive layer.

The total thickness of the receptor sheet is usually between 5 and 1200 μm, for example, between 25 and 700 μm. If the receptor sheet is too thin, its mechanical strength will be so low that the sheet may be damaged when it is applied to an adherend and then peeled off again. On the other hand, the flexibility of the marking film including the receptor sheet may suffer if the sheet is too thick.

**Examples**

Manufacture of (meth)acrylic polymer having Tg 0°C or higher

60 weight parts methyl methacrylate (MMA), 34 weight parts n-butyl methacrylate (BMA), and 6 weight parts dimethylaminoethyl methacrylate (DMM) were dissolved in 150 weight parts ethyl acetate, and 0.6 weight part dimethyl-2,2'-azobis(2-methyl propionate) (V-601 made by Wako Pure Chemical Industries) was added as a polymerization initiator, after which the system was reacted for 24 hours at 65°C under a nitrogen atmosphere, which produced an ethyl acetate solution of a (meth)acrylic polymer having a Tg of 0°C or higher (hereinafter referred to as H-1).

Similarly, ethyl acetate solutions of (meth)acrylic polymers H-2 to H-12 were obtained with the compositions shown in Table 1 below.

Manufacture of (meth)acrylic polymer having Tg 0°C or lower

94 weight parts BA and 6 weight parts acrylic acid (AA) were dissolved in 100 weight parts methyl ethyl ketone (MEK), and 0.2 weight part azobis(2,4-dimethylvaleronitrile) (V-65 made by Wako Pure Chemical Industries) was added as a polymerization initiator, after which the system was reacted for 24 hours at 50°C under a nitrogen atmosphere, which produced a MEK solution of a (meth)acrylic polymer having a Tg of 0°C or lower (hereinafter referred to as S-1).

Similarly, MEK solutions of (meth)acrylic polymers S-2 to S-4 were obtained with the compositions shown in Table 2 below.

Measurement of Tg (0°C or higher)

The peak temperature was measured for the loss tangent (tan$\delta$) (loss modulus E"/storage modulus E), using a sample having a film thickness of 50 $\mu$m, a film width of 10 mm, and a film length of 15 mm, using an RSA-II made by Rheometric Scientific in tension mode, at a frequency of 10.0 Hz, and at 0 to 150°C at a temperature elevation rate of 5.0°C/second.

Measurement of Tg (0°C or lower)

The peak temperature was measured for the loss tangent (tan$\delta$) (loss modulus G"/storage modulus G'), using a cylindrical polymer sample having a diameter of 7.9 mm and a height of 3.0 mm, using an Ares made by Rheometric Scientific in shear mode, at a frequency of 10.0 Hz, and at -80 to 30°C at a temperature elevation rate of 5.0°C/second.

Molecular Weight

The term "weight average molecular weight (Mw)" means the molecular weight as measured according to gel permeation chromatography (GPC), in terms of styrene.

Abbreviations

MMA: Methyl methacrylate
BMA: n-Butyl methacrylate
DMM: N,N-Dimethylaminoethyl methacrylate
DMAPAA: N,N-Dimethylaminopropyl acrylamide
Vim: 1-Vinylimidazole
TMPM: Tetramethylpiperidyl methacrylate (FANCRYL™ FA-712HM from Hitachi)
PMPM: Pentamethylpiperidyl methacrylate (FANCRYL™ FA-711MM from Hitachi)
MAA: Methacrylic acid
BA: n-Butyl acrylate
HEMA: 2-Hydroxyethyl methacrylate
MAEHPB: 5-(2-Methacryloxyethyl)-2-hydroxyphenylbenzotriazole
CHMA: Cyclohexyl methacrylate
AA: Acrylic acid
DMA: N,N-Dimethylaminoethyl acrylate

Table 1:(Meth)acrylic Polymers Having a Tg≥0°C

| Ex. | Composition (pbw = parts by weight) | Polymer category | Tg (°C) | Mw (×10⁴) |
|---|---|---|---|---|
| H-1 | MMA/BMA/DMM (60:34:6 pbw) | Containing amino groups | 90 | 8.8 |
| H-2 | MMA/BMA/DMAPAA (59:34:7 pbw) | Containing amino groups | 98 | 8.8 |
| H-3 | MMA/BMA/Vim (60:34:6 pbw) | Containing amino groups | 101 | 0.9 |
| H-4 | MMA/BMA/TMPM (60:34:6 pbw) | Containing piperidinyl groups | 103 | 4 |
| H-5 | MMA/BMA/PMPM (56:34:10 pbw) | Containing piperidinyl groups | 103 | 2.9 |
| H-6 | MMA/BMA/TMPM/PMPM (60:34:4.5:1.5 pbw) | Containing piperidinyl groups | 100 | 8.7 |
| H-7 | MMA/BMA/DMM/TMPM (60:34:3:3 pbw) | Containing piperidinyl groups | 101 | 4.5 |
| H-8 | MMA/BMA/DMM/TMPM (60:34:5:1 pbw) | Containing piperidinyl groups | 99 | 5.6 |
| H-9 | MMABMA/DMM/PMPM (60:34:3:3 pbw) | Containing piperidinyl groups | 101 | 8.8 |
| H-10 | BMA/MAA (94:6 pbw) | Containing carboxyl groups | 87 | 10.3 |
| H-11 | MMA/BA/HEMA/MAEHPB/TMPM (30:30:13:26:0.1 pbw) | UV absorbent polymer containing carboxyl groups | 38 | 4.6 |
| H-12 | MMA/CHMA/HEMA/MAEHPB/BA (32:28:14:21:5 pbw) | UV absorbent polymer | 76 | 4.8 |

Table 2:(Meth)acrylic Polymers Having a Tg≤0°C

| Ex. | Composition (pbw = parts by weight) | Polymer category | Tg (°C) | Mw (×10⁴) | Mw/Mn |
|---|---|---|---|---|---|
| S-1 | BA/AA (94:6 pbw) | Containing carboxyl groups | -17 | 22.6 | 3.4 |
| S-2 | BA/TMPM (90:10 pbw) | Containing piperidinyl groups | -20 | 4.2 | 2.7 |
| S-3 | BA/DMA/TMPM (88:6:6 pbw) | Containing piperidinyl groups | -17 | 2.8 | 2.4 |
| S-4 | BA/DMA/PMPM (87:6:7 pbw) | Containing piperidinyl groups | -32 | 11.9 | 3.5 |

Test methods

Tensile Test (Dumbbell shape)

Measurements were made under the following conditions, according to the method set forth in Japanese Industrial Standards (JIS) K 6251.
Shape of measurement sample: "dumbbell shape No. 3" defined in JIS K 6251
Pulling speed: 300 mm/min
Measurement temperature: two levels, 5°C and 25°C
The measurement results were summarized as follows.

Tensile Strength (Dumbbell shape)(at break) T (units: MPa)

The tensile force F (units: N) at the point when the measurement sample broke, and the cross sectional area A (units: mm²) of the measurement sample were measured, and the tensile strength at break was found from the following equation.

$$T = F/A$$

Tensile Strength (Dumbbell shape) (at yield) T' (units: MPa)

The tensile force F' (units: N) at the point of measurement sample yield, and the cross sectional area A (units: $mm^2$) of the measurement sample were measured, and the tensile strength at yield was found from the following equation.

$$T' = F'/A$$

Elongation E (Dumbbell shape) (units: %)

The distance (units: mm) between marker lines L1 at the point when the measurement sample broke, and the distance between marker lines L0 (25 mm) were measured, and the elongation was found from the following equation.

$$E = (L1 - L0)/L0 \times 100$$

Yellowing Index ($\Delta$YI)

Yellowing Index ($\Delta$YI) is the difference between initial yellowness ($YI_0$) and yellowness after high-temperature testing (YI). The yellowness ($YI_0$) was measured under the following conditions, according to the method set forth in JIS K 7105.

Measurement sample: A sample was cut to 50 $\times$ 50 mm and placed on a sheet of glass measuring 50 $\times$ 50 $\times$ 2.0 mm (thickness) as discussed in JIS R 3203, and this product was used as the test piece.

Measurement machine: SZ-Sensor made by Nippon Denshoku Industries

The above-mentioned measurement sample was heated for 60 minutes in a 200°C oven, after which its yellowness was measured again in the same manner, and this value was termed the yellowness (YI) after high-temperature testing.

The yellowing index ($\Delta$YI) was found from the following equation, using the measured values for the above-mentioned yellowness ($YI_0$) and the yellowness after high-temperature testing (YI).

Yellowing index ($\Delta$YI) = yellowness after high-temperature testing (YI) - yellowness ($YI_0$).

Total Optical Transmissivity, Haze (before and after high-temperature testing)

The total optical transmissivity (TOT) and haze were measured under the following conditions, according to the method set forth in JIS K 7105.

Measurement sample: A (meth)acrylic film was cut to 50 $\times$ 50 mm and placed on a sheet of glass measuring 50 $\times$ 50 $\times$ 2.0 mm (thickness) as discussed in JIS R 3203, and this product was used as the test piece.

Measurement machine: NDH-Sensor made by Nippon Denshoku Industries

The above-mentioned measurement sample was heated for 60 minutes in a 200°C oven, after which its total optical transmissivity and haze were measured again in the same manner, and these values were termed the total optical transmissivity and haze after high-temperature testing.

Tensile Test (Strip-shaped)

Some (meth)acrylic films were measured under the following conditions.

Measurement sample shape: Strips 25 mm wide were readied, and measurement was commenced from a state in which the initial clamping gap of the Tensilon tensile tester was 100 mm.

Pulling rate: 300 mm/min

Measurement temperature: 20°C

The measurement results were summarized as follows.

Tensile Strength (Strip-shaped) (at break) $T_{20}$ (units: MPa)

The tensile force $F_{20}$ (units: N) at the point when the measurement sample broke, and the cross sectional area $A_{20}$ (units: mm$^2$) of the measurement sample were measured, and the tensile strength at break was found from the following equation.

$$T_{20} = F_{20}/A_{20}$$

Tensile Strength (Strip-shaped) (at yield) $T_{20}'$ (units: MPa)

The tensile force $F_{20}'$ (units: N) at the point of measurement sample yield, and the cross sectional area $A_{20}$ (units: mm$^2$) of the measurement sample were measured, and the tensile strength at yield was found from the following equation.

$$T_{20}' = F_{20}'/A$$

Elongation $E_{20}$ (Strip-shaped) (units: %)

The distance (units: mm) between marker lines L1 at the point when the measurement sample broke was measured, and the elongation was found from the following equation, using an initial clamping gap of the Tensilon tensile tester of 100 mm.

$$E_{20} = (L1 - 100)/100 \times 100$$

Miscibility

Mixed (meth)acrylic resin composition solutions were visually observed, and a rating of "good" was given if the solutions were transparent, and "poor" if the solutions were turbid.

Transparency

A (meth)acrylic film was visually observed for transmitted light, and a rating of "good" was given if the film was transparent, and "poor" if the film was turbid.

Surface Gloss Retention (units: %), Color Difference (C)

The surface gloss retention and color difference were found as follows.
First, an acrylic pressure-sensitive adhesive was readied, which was composed of a butyl acrylate/acrylonitrile/acrylic acid copolymer (compositional ratio (weight ratio) of 93/3/4), and which had a weight average molecular weight of 390,000 and a glass transition point of -21°C. 0.2 weight part of isophthaloyl bis(2-methylaziridine) was added to 100 weight parts (solids ratio) of this acrylic pressure-sensitive adhesive to prepare a pressure-sensitive adhesive composition. A knife coater was used to apply this adhesive composition to a paper-based double-sided polyethylene laminate release sheet such that the thickness after drying would be approximately 30 μm, and this coating was dried for 5 minutes in a 90°C oven to obtain a pressure-sensitive adhesive layer. After this, the pressure-sensitive adhesive layer was laminated to a measurement film (such as a (meth)acrylic film) to prepare a measurement sample. This measurement sample was stuck onto an aluminum sheet with a thickness of 1 mm (JIS standard A5082P) under conditions of passing a 2 kg roller back and forth one time over the sample, and an accelerated aging test was conducted for 500 hours using metal weatherometer (KU-R5C1-A) made by Daipla Wintes. The accelerated aging test was conducted with the following cycle.

4 hours with the light on, at an optical energy of 600 mW/cm$^2$, a temperature of 60°C, and a humidity of 50%
4 hours with the light off, at a temperature of 40°C and a humidity of 98%

The 60° surface gloss ($B_0$) before the accelerated aging test and the 60° surface gloss ($B_1$) after the accelerated aging test were measured with a portable gloss meter (GMX-202 made by Murakami Saishoku Gijutsu Kenkyusho), and the surface gloss retention B was found from these measured values using the following equation.

$$B\ (\%) = B_1/B_0 \times 100$$

L*, a*, and b* were measured with a color meter ($\Sigma$90 made by Nippon Denshoku). The color difference C was found using the following equation, where L0*, a0*, and b0* are the measured values before the accelerated aging test, and L1*, a1*, and b1* are the measured values after the accelerated aging test.

$$C = [(L1* - L0*)^2 + (a1* - a0*)^2 + (b1* - b0*)^2]^{1/2}$$

Film Toughness (after accelerated aging)

The film toughness after accelerated aging was evaluated by laminating a pressure-sensitive adhesive layer to a (meth)acrylic film and observing how well this laminate could be peeled off again after being stuck onto an aluminum substrate. This re-release performance was evaluated as follows.
First, an accelerated aging test was conducted in the same manner as in the measurement of surface gloss retention and color difference. After the accelerated aging test, the measurement sample was peeled away from the aluminum plate, a rating of "good" was given if the measurement sample would be peeled off without tearing, and "poor" if there was some tearing.

EXAMPLE A

Example 1

The (meth)acrylic polymer solutions H-4 in which TMPM was used as a monomer containing piperidinyl groups and S-1 were mixed in a solids ratio of 70:30 as shown in Table 3, and the mixture was stirred to obtain a (meth)acrylic polymer solution. Table 3 gives the blend ratio. This solution was applied with a knife coater to a release-treated polyester carrier film of 38 $\mu$m (trade name Purex™ A-71, made by Teijin) so that the film thickness after drying would be 50 $\mu$m. This coating was dried for 20 minutes at 100°C, after which the carrier film was removed to obtain a (meth)acrylic film. The film thus obtained was subjected to various tests by the above test methods, the results of which are given in Table 4.

Examples 2-11 and Comparative Examples 1-6

For each example, various polymers at different blend ratios as listed in Table 3 were prepared the same as for Example 1. Comparative Examples 4-6 comprised additional components as listed in Table 3. Films were then prepared as described for Example 1 and then subjected to various tests by the above test methods, the results of which are given in Table 4.

Table 3: blend ratios

| Ex. | Tg > 0°C polymer | Tg < 0°C polymer | Solids ratio (wt%) | Additive (weight parts based on the total polymer) |
|---|---|---|---|---|
| 1 | H-4 | S-1 | 70:30 | - |
| 2 | H-4 | S-1 | 60:40 | - |
| 3 | H-4 | S-1 | 50:50 | - |
| 4 | H-5 | S-1 | 60:40 | - |
| 5 | H-6 | S-1 | 60:40 | - |
| 6 | H-7 | S-1 | 60:40 | - |
| 7 | H-8 | S-1 | 60:40 | - |

(continued)

| Ex. | Tg > 0°C polymer | Tg < 0°C polymer | Solids ratio (wt%) | Additive (weight parts based on the total polymer) |
|---|---|---|---|---|
| 8 | H-9 | S-1 | 60:40 | - |
| 9 | H-10 | S-2 | 80:20 | - |
| 10 | H-10 | S-3 | 80:20 | - |
| 11 | H-10 | S-4 | 80:20 | - |
| 12 | H-4 | S-1 | 50:50 | - |
| C1 | H-1 | S-1 | 60:40 | - |
| C2 | H-2 | S-1 | 60:40 | - |
| C3 | H-3 | S-1 | 60:40 | - |
| C4 | H-1 | S-1 | 60:40 | Irganox™ 1010 (0.20) |
| C5 | H-1 | S-1 | 60:40 | Irganox™ 1076 (0.20) |
| C6 | H-1 | S-1 | 60:40 | Tinuvin™ 622LD (0.20) |
| C7 | H-1 | S-1 | 55:45 | - |
| C8 | H-1 + H-11 | S-1 | 54:3:43 | isophthaloyl bis(2-methylaziridine) (0.22) |
| C9 | H-1 + H-12 | S-1 | 54:3:43 | isophthaloyl bis(2-methylaziridine) (0.22) |
| Control | H-1 | S-1 | 56:44 | isophthaloyl bis(2-methylaziridine) (0.22) |
| Irganox™ 1010 and 1076 are antioxidants from Ciba-Geigy<br>Tinuvin™ 622LD is a UV absorber from Ciba-Geigy | | | | |

Table 4: Test results

| Ex. | Initial | | | After 60 min. at 200°C | | | Tensile strength 25°C (dumbbell) | | | Tensile strength 25°C (dumbbell) | | |
|---|---|---|---|---|---|---|---|---|---|---|---|---|
| | $YI_0$ | Haze (%) | TOT (%) | $YI^1$ | Haze (%) | TOT (%) | Yield (MPa) | Break (MPa) | Elong. (%) | Yield (MPa) | Break (MPa) | Elong. (%) |
| 1 | 0.2 | 0.2 | 91.4 | 0.3 (0.1) | 0.2 | 91.4 | 42.8 | 28 | 48 | 51.5 | - | 8 |
| 2 | 0.1 | 0.2 | 91.7 | 0.2 (0.1) | 0.2 | 91.5 | 27.4 | 26 | 170 | 48.5 | 35 | 28 |
| 3 | 0.2 | 0.2 | 91.5 | 0.3 (0.1) | 0.5 | 91.4 | 20.5 | 21 | 377 | 29.8 | 29 | 172 |
| 4 | 0.7 | 1 | 91.6 | 0.8 (0.1) | 0.9 | 91.6 | 27 | 22 | 170 | 45.7 | 29 | 56 |
| 5 | 0.1 | 0.2 | 91.5 | 0.3 (0.2) | 0.3 | 91.5 | 26.7 | 25 | 213 | 45.9 | 30 | 34 |
| 6 | 0.1 | 0.2 | 91.6 | 0.3 (0.2) | 0.2 | 91.5 | 26.4 | 23 | 186 | 47.6 | 30 | 39 |
| 7 | 0.4 | 0.2 | 91.4 | 0.6 (0.2) | 0.2 | 91.4 | 26 | 26.5 | 257 | 45.6 | 31 | 71 |
| 8 | 0.1 | 0.2 | 91.7 | 0.4 (0.3) | 0.1 | 91.4 | 23.4 | 23.5 | 244 | 42.3 | 28.5 | 69 |
| 9 | 0.5 | 0.1 | 91.4 | 0.5 (0.0) | 0.2 | 91.2 | 23.5 | 17 | 167 | 36.7 | 26.5 | 27 |

(continued)

| Ex. | Initial | | | After 60 min. at 200°C | | | Tensile strength 25°C (dumbbell) | | | Tensile strength 25°C (dumbbell) | | |
|---|---|---|---|---|---|---|---|---|---|---|---|---|
| | $YI_0$ | Haze (%) | TOT (%) | $YI^1$ | Haze (%) | TOT (%) | Yield (MPa) | Break (MPa) | Elong. (%) | Yield (MPa) | Break (MPa) | Elong. (%) |
| 10 | 0.2 | 0.2 | 91.6 | 0.2 (0.0) | 0.1 | 91.5 | 24.4 | 19.5 | 197 | 43.3 | 29 | 29 |
| 11 | 0.8 | 0.1 | 91.3 | 1.1 (0.3) | 0.1 | 91.2 | 19.5 | 19 | 280 | 35.2 | 24.5 | 87 |
| C1 | 0.4 | 0.2 | 91.6 | 4.1 (3.6) | 0.2 | 90.4 | 27.3 | 26 | 251 | 46.4 | 30 | 72 |
| C2 | 0.5 | 0.3 | 91 | 3.5 (3.0) | 0.5 | 90.5 | 23.9 | 23.5 | 261 | 36.8 | 31.5 | 97 |
| C3 | 1.2 | 1.8 | 91.1 | 5.3 (4.1) | 5.4 | 90.8 | 23.1 | 22.5 | 245 | 38.1 | 30.5 | 110 |
| C4 | 0.5 | 0.4 | 91.2 | 2.4 (1.9) | 0.3 | 90.7 | 23.7 | 19 | 193 | 43.5 | 30 | 44 |
| C5 | 0.4 | 0.3 | 91.2 | 2.4 (2.0) | 0.1 | 90.8 | 21 | 21.5 | 298 | 39.3 | 27 | 101 |
| C6 | 0.6 | 0.3 | 90.8 | 3.9 (3.3) | 0.2 | 91 | 25.6 | 26 | 245 | 45.6 | 30 | 60 |

Regarding the test results presented in Table 4, it is desirable for the films to exhibit little or no yellow appearance before and after aging, and this is usually the case if yellowness is less than about 1.0. Examples 1-11, which all contained piperidynyl groups, exhibited low initial yellowness with little change after high temperature testing, as well as no visible evidence of yellowing. In contrast, the changes in yellowness for Comparative Examples 1-6, which all contained amino groups and no piperidynyl groups, were much greater even if antioxidants and UV absorbers were added.

EXAMPLE B

Example 12

The (meth)acrylic polymer solution H-4, which had a Tg 0°C or higher, and the (meth)acrylic polymer solution S-1, which had a Tg 0°C or lower, were mixed in a solids ratio of 50:50. The solvent in these mixed solutions was removed by heating for 30 minutes in a 150°C oven, which gave a (meth)acrylic resin composition. The (meth)acrylic resin composition thus obtained was melted for approximately 2 minutes at a temperature of 180°C in a twin-screw extruder (made by Technovel) with an inside diameter of 20 mm and whose screws rotated in the same direction. The composition was extruded from a T-die with a width of 10 cm, so as to coat the silicone-treated surface of a polyester liner with a thickness of 50 μm. This was brought into contact with a water-cooled casting roll to cool and solidify the molten polymer, thereby forming a uniform film with a thickness of 50 μm. The film thus obtained was subjected to various tests as described above. Even though the composition was exposed to high temperature and pressure during melt extrusion, the molded film had a total optical transmissivity of over 92.9%, its haze was 1.2%, its yellowness was 0.9, and it was optically colorless and transparent.

Comparative Example 7

This example was prepared the same as for Example 12, except that the polymers and blend ratio were as listed in Table 3. The molded film had a total optical transmissivity of 93.0%, however, its haze was 3.2% and its yellowness was 1.5. Also, the heating in the extrusion step resulted in yellowing being observed.

EXAMPLE C

Control Example and Comparative Examples 8 and 9

For each example, various polymers at different blend ratios as listed in Table 3 were prepared the same as for Example 1. The Control Example comprised a copolymer containing no piperidynyl groups, only amino groups. Comparative 8 was prepared the same, except that a UV absorbant polymer containing carboxyl groups was added. Comparative 9 was prepared the same, except that a UV absorbant polymer not containing carboxyl groups was added. Films were subjected to various tests by the above test methods, the results of which are given in Table 5.

Table 5: Test results

| Ex. | Tensile Strength 20°C (Strips) | | | Miscibility | Transparency | Color Diff. | Gloss Reten. (%) | Film Toughness (after aging) |
|---|---|---|---|---|---|---|---|---|
| | Yield (MPa) | Break (MPa) | Elong. (%) | | | | | |
| C8 | 14.4 | 20 | 234 | good | good | 0.5 | 103 | good |
| C9 | 16.8 | 22.4 | 226 | poor | poor | 0.6 | 109 | good |
| Control | 14.4 | 20 | 236 | good | good | 0.3 | 101 | poor |

Comparatives 8 and 9 were prepared in order to see if different types of incorporation of a UV absorbing component would be useful in improving the yellowing of a copolymer comprising amino groups which was used in the Control Example. Incorporation of a UV absorbing component into the carboxyl containing polymer of the Control Example did not improve the yellowing, and in fact, yellowing increased. If the carboxyl group was not included in the copolymer, then miscibility and transparency were negatively affected, and yellowness still increased.

**Claims**

1. A (meth)acrylic resin composition, comprising:

    (A) a carboxyl group-containing (meth)acrylic polymer; and
    (B) a piperidinyl group-containing (meth)acrylic polymer.

2. The (meth)acrylic resin composition according to Claim 1, wherein the resin comprises:

    (A) a carboxyl group-containing (meth)acrylic polymer; and
    (B) a piperidinyl group-containing (meth)acrylic polymer selected such that when a glass transition temperature (Tg) of (A) is 0°C or higher, a Tg of (B) is 0°C or lower, and when Tg of (A) is 0°C or lower, a Tg of (B) is 0°C or higher.

3. The (meth)acrylic resin composition according to Claims 1 or 2, wherein the carboxyl group-containing (meth)acrylic polymer and/or the piperidinyl group-containing (meth)acrylic polymer further comprises an ultraviolet absorbent monomer.

4. The (meth)acrylic resin composition according to any of Claims 1 to 3, further comprising an amino group-containing (meth)acrylic polymer.

5. A (meth)acrylic film comprising:

    (A) a carboxyl group-containing (meth)acrylic polymer; and
    (B) a piperidinyl group-containing (meth)acrylic polymer.

6. The (meth)acrylic film according to Claim 5, wherein the (meth)acrylic film comprises

    (A) a carboxyl group-containing (meth)acrylic polymer; and
    (B) a piperidinyl group-containing (meth)acrylic polymer selected such that when Tg of (A) is 0°C or higher, a Tg of (B) is 0°C or lower, and when Tg of (A) is 0°C or lower, a Tg of (B) is 0°C or higher.

7.  The (meth)acrylic film according to Claims 5 or 6, wherein the carboxyl group-containing (meth)acrylic polymer and/or the piperidinyl group-containing (meth)acrylic polymer further comprises an ultraviolet absorbent monomer.

8.  The (meth)acrylic film according to any of Claims 5 to 7, further comprising an amino group-containing (meth)acrylic polymer.

9.  The (meth)acrylic film according to any of Claims 5 to 8, wherein the yellowing index ($\Delta$YI) is less than 1.0.

10. The (meth)acrylic film according to any of Claims 5 to 9, wherein the tensile strength at break at 25°C as set forth in JIS K 6251 is at least 3 MPa.

11. The (meth)acrylic film according to any of Claims 5 to 10, the film produced by melt extrusion molding.

12. A receptor sheet comprising:

    the (meth)acrylic film according to any one of Claims 5 to 11; and
    a receptor layer on a surface of the (meth)acrylic film, the receptor layer comprising a resin having a glass transition temperature between 0 and 100°C.

13. A receptor sheet comprising:

    the (meth)acrylic film according to any one of Claims 5 to 11; and
    an adhesive layer on a first surface of the (meth)acrylic film, the adhesive layer comprising a pressure sensitive adhesive.

14. A receptor sheet comprising:

    the receptor sheet of Claim 13; and
    a receptor layer on a second surface of the (meth)acrylic film, the receptor layer comprising a resin having a glass transition temperature between 0 and 100°C, and the second surface being opposite the first surface.

15. A marking film comprising:

    the receptor sheet of Claim 13;
    one or more colorants on a second surface of the (meth)acrylic film, the second surface being opposite the first surface; and
    a protective film on the one or more colorants, the protective film comprising a resin and having an optical transmissivity of at least 60%.

**Patentansprüche**

1.  (Meth)acrylharzzusammensetzung, umfassend:

    (A) ein carboxylgruppenhaltiges (Meth)acrylpolymer und
    (B) ein piperidinylgruppenhaltiges (Meth)acrylpolymer.

2.  (Meth)acrylharzzusammensetzung nach Anspruch 1, wobei das Harz

    (A) ein carboxylgruppenhaltiges (Meth)acrylpolymer und
    (B) ein piperidinylgruppenhaltiges (Meth)acrylpolymer, das so gewählt ist, daß dann, wenn eine Glasübergangstemperatur (Tg) von (A) 0°C oder mehr beträgt, eine Tg von (B) 0°C oder weniger beträgt, und dann, wenn eine Tg von (A) 0°C oder weniger beträgt, eine Tg von (B) 0°C oder mehr beträgt,

    umfaßt.

**3.** (Meth)acrylharzzusammensetzung nach Anspruch 1 oder 2, wobei das carboxylgruppenhaltige (Meth)acrylpolymer und/oder das piperidinylgruppenhaltige (Meth)acrylpolymer ferner ein Ultraviolett-absorbierendes Monomer umfassen.

**4.** (Meth)acrylharzzusammensetzung nach einem der Ansprüche 1 bis 3, die ferner ein aminogruppenhaltiges (Meth)acrylpolymer umfaßt.

**5.** (Meth)acrylfolie, umfassend:

      (A) ein carboxylgruppenhaltiges (Meth)acrylpolymer und
      (B) ein piperidinylgruppenhaltiges (Meth)acrylpolymer.

**6.** (Meth)acrylfolie nach Anspruch 5, wobei die (Meth)acrylfolie

      (A) ein carboxylgruppenhaltiges (Meth)acrylpolymer und
      (B) ein piperidinylgruppenhaltiges (Meth)acrylpolymer, das so gewählt ist, daß dann, wenn eine Tg von (A) 0°C oder mehr beträgt, eine Tg von (B) 0°C oder weniger beträgt, und dann, wenn eine Tg von (A) 0°C oder weniger beträgt, eine Tg von (B) 0°C oder mehr beträgt,

umfaßt.

**7.** (Meth)acrylfolie nach Anspruch 5 oder 6, wobei das carboxylgruppenhaltige (Meth)acrylpolymer und/oder das piperidinylgruppenhaltige (Meth)acrylpolymer ferner ein Ultraviolett-absorbierendes Monomer umfassen.

**8.** (Meth)acrylfolie nach einem der Ansprüche 5 bis 7, die ferner ein aminogruppenhaltiges (Meth)acrylpolymer umfaßt.

**9.** (Meth)acrylfolie nach einem der Ansprüche 5 bis 8, wobei der Gelbwert (DYI) weniger als 1,0 beträgt.

**10.** (Meth)acrylfolie nach einem der Ansprüche 5 bis 9, wobei die Reißfestigkeit bei 25°C gemäß JIS K 6251 mindestens 3 MPa beträgt.

**11.** (Meth)acrylfolie nach einem der Ansprüche 5 bis 10, die durch Schmelzextrusionsformen hergestellt wird.

**12.** Empfangsblatt, umfassend:

      die (Meth)acrylfolie nach einem der Ansprüche 5 bis 11 und
      eine Empfangsschicht auf einer Oberfläche der (Meth)acrylfolie, wobei die Empfangsschicht ein Harz mit einer Glasübergangstemperatur zwischen 0 und 100°C umfaßt.

**13.** Empfangsblatt, umfassend:

      die (Meth)acrylfolie nach einem der Ansprüche 5 bis 11 und
      eine Klebstoffschicht auf einer ersten Oberfläche der (Meth)acrylfolie,
      wobei die Klebstoffschicht einen Haftklebstoff umfaßt.

**14.** Empfangsblatt, umfassend:

      das Empfangsblatt nach Anspruch 13 und
      eine Empfangsschicht auf einer zweiten Oberfläche der (Meth)acrylfolie,
      wobei die Empfangsschicht ein Harz mit einer Glasübergangstemperatur zwischen 0 und 100°C umfaßt und die zweite Oberfläche der ersten Oberfläche gegenüberliegt.

**15.** Markierungsfolie, umfassend:

      das Empfangsblatt nach Anspruch 13;
      ein oder mehrere Farbmittel auf einer zweiten Oberfläche der (Meth)acrylfolie, wobei die zweite Oberfläche der ersten Oberfläche gegenüberliegt; und
      eine Schutzfolie auf dem einen oder den mehreren Farbmitteln, wobei die Schutzfolie ein Harz umfaßt und eine optische Durchlässigkeit von mindestens 60% aufweist.

**Revendications**

1. Composition de résine (méth)acrylique, comprenant :

   (A) un polymère (méth)acrylique contenant des groupes carboxyle ; et
   (B) un polymère (méth)acrylique contenant des groupes pipéridinyle.

2. Composition de résine (méth)acrylique selon la revendication 1, la résine comprenant :

   (A) un polymère (méth)acrylique contenant des groupes carboxyle ; et
   (B) un polymère (méth)acrylique contenant des groupes pipéridinyle choisi de telle sorte que, quand la température de transition vitreuse (Tg) de (A) est de 0 °C ou plus, la Tg de (B) est de 0 °C ou moins, et quand la Tg de (A) est de 0 °C ou moins, la Tg de (B) est de 0 °C ou plus.

3. Composition de résine (méth)acrylique selon la revendication 1 ou 2, dans laquelle le polymère (méth)acrylique contenant des groupes carboxyle et/ou le polymère (méth)acrylique contenant des groupes pipéridinyle comprennent en outre un monomère absorbant les ultraviolets.

4. Composition de résine (méth)acrylique selon l'une quelconque des revendications 1 à 3, comprenant en outre un polymère (méth)acrylique contenant des groupes amino.

5. Film (méth)acrylique, comprenant :

   (A) un polymère (méth)acrylique contenant des groupes carboxyle ; et
   (B) un polymère (méth)acrylique contenant des groupes pipéridinyle.

6. Film (méth)acrylique selon la revendication 5, le film (méth)acrylique comprenant :

   (A) un polymère (méth)acrylique contenant des groupes carboxyle ; et
   (B) un polymère (méth)acrylique contenant des groupes pipéridinyle choisi de telle sorte que, quand la Tg de (A) est de 0 °C ou plus, la Tg de (B) est de 0 °C ou moins, et quand la Tg de (A) est de 0 °C ou moins, la Tg de (B) est de 0 °C ou plus.

7. Film (méth)acrylique selon la revendication 5 ou 6, dans lequel le polymère (méth)acrylique contenant des groupes carboxyle et/ou le polymère (méth)acrylique contenant des groupes pipéridinyle comprennent en outre un monomère absorbant les ultraviolets.

8. Film (méth)acrylique selon l'une quelconque des revendications 5 à 7, comprenant en outre un polymère (méth)acrylique contenant des groupes amino.

9. Film (méth)acrylique selon l'une quelconque des revendications 5 à 8, dans lequel l'indice de jaunissement (ΔYI) est inférieur à 1,0.

10. Film (méth)acrylique selon l'une quelconque des revendications 5 à 9, dans lequel la résistance à la traction à la rupture à 25 °C telle que définie dans JIS K 6251 est d'au moins 3 MPa.

11. Film (méth)acrylique selon l'une quelconque des revendications 5 à 10, le film étant produit par moulage par extrusion à l'état fondu.

12. Feuille réceptrice, comprenant :

   le film (méth)acrylique selon l'une quelconque des revendications 5 à 11 ; et
   une couche réceptrice sur une surface du film (méth)acrylique, la couche réceptrice comprenant une résine ayant une température de transition vitreuse comprise entre 0 et 100 °C.

**13.** Feuille réceptrice, comprenant :

le film (méth)acrylique selon l'une quelconque des revendications 5 à 11 ; et
une couche adhésive sur une première surface du film (méth)acrylique, la couche adhésive comprenant un adhésif sensible à la pression.

**14.** Feuille réceptrice, comprenant :

la feuille réceptrice selon la revendication 13 ; et
une couche réceptrice sur une deuxième surface du film (méth)acrylique, la couche réceptrice comprenant une résine ayant une température de transition vitreuse comprise entre 0 et 100 °C, et la deuxième surface étant à l'opposé de la première surface.

**15.** Film de marquage, comprenant :

la feuille réceptrice selon la revendication 13 ;
un ou plusieurs colorants sur une deuxième surface du film (méth)acrylique, la deuxième surface étant à l'opposé de la première surface ; et
un film protecteur sur le(s) colorant(s), le film protecteur comprenant une résine et ayant une transmissivité optique d'au moins 60 %.

FIG. 1

FIG. 2

**EP 2 102 254 B1**

### Patent documents cited in the description

- JP 10101748 A
- WO 2005023916 A1